# EUROPÄISCHE PATENTSCHRIFT

(11) **EP 4 304 904 B1**
(45) Veröffentlichungstag und Bekanntmachung des Hinweises auf die Patenterteilung: **10.09.2025**
(21) Anmeldenummer: 22710028.6
(22) Anmeldetag: 01.03.2022
(51) Int. Cl.: B60T 7/04, B60T 7/08, B60T 7/20, B60T 13/38, B60T 15/18

(54) **VERFAHREN ZUM BETREIBEN EINES ELEKTROPNEUMATISCHEN FESTSTELLBREMSSYSTEMS UND ELEKTROPNEUMATISCHES FESTSTELLBREMSSYSTEM**
METHOD OF OPERATING AN ELECTROPNEUMATIC PARKING BRAKE SYSTEM AND ELECTROPNEUMATIC PARKING BRAKE SYSTEM
PROCÉDÉ DE FONCTIONNEMENT D'UN SYSTÈME DE FREIN DE STATIONNEMENT ÉLECTROPNEUMATIQUE ET SYSTÈME DE FREIN DE STATIONNEMENT ÉLECTROPNEUMATIQUE

(30) Priorität: 10.03.2021 DE 102021105755
(43) Veröffentlichungstag der Anmeldung: 17.01.2024
(73) Patentinhaber: ZF CV Systems Global GmbH, 3006 Bern (CH)
(72) Erfinder: OTREMBA, Robert, 30952 Ronnenberg (DE); PETERS, Andreas, 31683 Obernkirchen (DE); WASSMANN, Alexander, 31555 Suthfeld (DE)
(74) Vertreter: Rabe, Dirk-Heinrich
(86) Internationale Anmeldenummer: PCT/EP2022/055074
(87) Internationale Veröffentlichungsnummer: WO 2022/189203

(56) Entgegenhaltungen:
- DE-A1- 102017 006 356

## Beschreibung

Die Erfindung betrifft ein Verfahren nach dem Oberbegriff des Anspruchs 1. Daneben betrifft die Erfindung ein elektropneumatisches Feststellbremssystem, ein Computerprogrammprodukt, ein elektropneumatisches Steuermodul und ein Fahrzeug mit Feststellbremssystem.

Insbesondere geht es um ein Verfahren zum Betreiben eines Feststellbremssystems mit Federspeicherbremse und Steuermodul, in einem Motorwagen oder Anhängefahrzeug, wobei das Steuermodul an einen Feststellbremskreis angeschlossen ist, der Feststellbremskreis mit einem Vorratsdruck versorgt wird und Federspeicherbremszylinder zur Einnahme einer Lösestellung der Federspeicherbremse mit einem Federspeicherhaltedruck beaufschlagt werden.

In Fahrzeugen, insbesondere Nutzfahrzeugen, mit einem elektropneumatischen Bremssystem können zum Aussteuern von Bremsdrücken von einer elektronischen Steuereinheit elektropneumatische Ventile angesteuert werden, die in Abhängigkeit von einer angeforderten Fahrzeug-Soll-Verzögerung pneumatisch einen Bremsdruck an Bremszylinder des Bremssystems weiterleiten.

Ein elektropneumatisches Bremssystem für ein Fahrzeug umfasst ein Betriebsbremssystem und ein Feststellbremssystem. Das Betriebsbremssystem weist eine elektronische Steuereinheit zur Ansteuerung elektropneumatischer Ventilanordnungen auf, um so die Bremszylinder einer Betriebsbremse mit Bremsdruck zu beaufschlagen.

Das Feststellbremssystem weist eine Federspeicherbremse auf. Eine Kraft zur Betätigung dieser Bremse wird durch Federspeicher aufgebracht, die in Federspeicherbremszylindern angeordnet sind. Die Federspeicherbremszylinder werden nur zum Lösen der Federspeicherbremse belüftet. Bei entlüfteten Federspeicherbremszylindern ist die Federspeicherbremse wirksam und bremst das Fahrzeug.

Ein elektropneumatisches Bremssystem mit Federspeicherbremse ist beispielsweise in der DE 10 2017 006 356 A1 offenbart.

Zur Betätigung der Federspeicherbremse kann in einer Fahrerkabine des Fahrzeugs ein elektrischer Schalter vorgesehen sein, über den ein entsprechendes Signal an eine elektronische Steuereinrichtung des Feststellbremssystems ausgebbar ist. Die elektronische Steuereinrichtung schaltet dann eine oder mehrere elektropneumatische Ventilanordnungen so, dass die Federspeicherbremszylinder entweder entlüftet oder belüftet werden. Ein derartiges System wird auch als elektropneumatische Handbremse bezeichnet.

Die elektropneumatische Handbremse beinhaltet auch ein elektropneumatisches Steuermodul mit einem pneumatischen Eingang zum Anschluss an einen Bremskreis des elektropneumatischen Bremssystems und einem pneumatischen Ausgang zur Verbindung mit den Federspeicherbremszylindern. Am Eingang liegt üblicherweise ein Vorratsdruck des angeschlossenen Bremskreises an. Ein Ausgangsdruck am Ausgang ist der Druck, mit dem die Federspeicherbremszylinder beaufschlagt werden. Ist der Ausgangsdruck gleich null, sind die Federspeicherbremszylinder entlüftet. Ist der Ausgangsdruck gleich dem Vorratsdruck, sind die Federspeicherbremszylinder belüftet und die Federspeicherbremse ist gelöst. Der bei gelöster Federspeicherbremse vorliegende Ausgangsdruck wird hier als Federspeicherhaltedruck bezeichnet.

Die Federspeicherbremse wird nicht nur durch den elektrischen Schalter in der Fahrerkabine betätigt, sondern kann auch durch andere im Fahrzeug vorhandene elektronische oder pneumatische Systeme ausgelöst werden, etwa bei Abfall des Vorratsdrucks in einem der Bremskreise des Fahrzeugs, bei Abriss einer Leitung zwischen Zugfahrzeug und Anhängefahrzeug, beim Abkoppeln des Anhängefahrzeugs vom Zugfahrzeug oder aus anderen Gründen. Im Einzelfall kann eine besonders schnelle Betätigung der Federspeicherbremse erforderlich oder hilfreich sein.

Je nach Ausführung und Einsatzzweck kann das Feststellbremssystem auch insgesamt oder teilweise rein pneumatisch ausgeführt sein. Entsprechend kann ein pneumatisches oder elektropneumatisches Steuermodul vorgesehen sein.

Der Vorratsdruck im Feststellbremssystem ist vorgegeben durch gesetzliche Bestimmungen und/oder technische Normen. Gleiches gilt für einen Federspeicherlösedruck. Dabei handelt es sich um den niedrigsten Druck, bei dem ein Federspeicher noch keine Kraft auf eine Druckstange in der Federspeicherbremse überträgt, also noch keine Bremswirkung durch die Federspeicherbremszylinder vorliegt. Sobald der Druck unter den Federspeicherlösedruck sinkt, tritt Bremswirkung ein. Der Federspeicherlösedruck kann auch durch den Hersteller der Bremsanlage im Rahmen regulatorischer Vorgaben festgelegt werden. Der Federspeicherlösedruck liegt deutlich unter dem Vorratsdruck, damit sichergestellt ist, dass die Federspeicherbremse vollständig gelöst werden kann.

Aufgabe der Erfindung ist die Schaffung eines Verfahrens, mit dem die Federspeicherbremse aus einem vollständig gelösten Zustand besonders schnell in einen Zustand mit Bremswirkung überleitbar ist.

Zur Lösung der Aufgabe weist das erfindungsgemäße Verfahren die Merkmale des Anspruchs 1 auf. Insbesondere ist vorgesehen, dass die Federspeicherbremszylinder mit einem Federspeicherhaltedruck beaufschlagt werden, der niedriger ist als der Vorratsdruck im Feststellbremskreis. Natürlich liegt der Federspeicherhaltedruck noch über dem Federspeicherlösedruck. Allerdings ist der Abstand zum Federspeicherlösedruck geringer als bisher üblich. Dadurch ist auch die beim Entlüften der Federspeicherbremszylinder zu bewegende Luftmasse geringer als bisher. Entsprechend schneller kann die Federspeicherbremse eingelegt werden. Der Zeitraum bis zum Wirken der Federspeicherbremse wird durch das erfindungsgemäße Verfahren verkürzt.

Der Federspeicherhaltedruck muss nicht zwingend der höchste Druck am Ausgang des vorzugsweise elektropneumatischen Steuermoduls sein. Beispielsweise kann zum schnellen Lösen der Federspeicher kurzzeitig ein höherer Druck ausgesteuert werden. Nach dem Lösen der Federspeicherbremse wird dann der Federspeicherhaltedruck eingestellt.

Nach einem weiteren Gedanken der Erfindung kann der Federspeicherhaltedruck 1 bis 5 bar unter dem Vorratsdruck liegen. Vorteilhafterweise kann der Federspeicherhaltedruck entsprechend eingestellt werden. In Europa beträgt der Vorratsdruck im Bremskreis vorzugsweise 8,5 bar. Davon oder von einem anderen Druck ausgehend, wird der Federspeicherhaltedruck um 1 bis 5 bar geringer eingestellt.

Vorteilhafterweise kann der Federspeicherhaltedruck 1,5 bis 3 bar unter dem Vorratsdruck liegen oder entsprechend eingestellt werden. In Europa liegt der Federspeicherlösedruck üblicherweise bei 5 bis 5,5 bar. Ein Federspeicherhaltedruck von 1,5 bis 3 bar unter dem Vorratsdruck sichert einerseits einen ausreichenden Abstand zum Federspeicherlösedruck und andererseits eine deutlich höhere Geschwindigkeit beim Einlegen der Federspeicherbremsen.

Nach einem weiteren Gedanken der Erfindung kann der Federspeicherhaltedruck um mindestens einen Sicherheitsabstand über einem Federspeicherlösedruck liegen, vorzugsweise mindestens 1 bis 2 bar darüber. Der gewünschte Sicherheitsabstand wird zur Berechnung und Einstellung des Federspeicherhaltedrucks verwendet und soll in der Praxis mögliche Abweichungen oder Schwankungen des Federspeicherlösedrucks berücksichtigen. Der Federspeicherlösedruck ist abhängig von den Eigenschaften der Federspeicherbremse und kann entweder durch Versuch bestimmt werden oder liegt als herstellerseitige Information vor. Die Eigenschaften der Federspeicherbremse können sich auch durch Verschleiß und Korrosion ändern.

Nach einem weiteren Gedanken der Erfindung kann der Federspeicherhaltedruck durch eine druckbegrenzend, druckmindernd oder druckregelnd wirkende Ventilanordnung bestimmt werden. Vorzugsweise handelt es sich dabei um eine rein pneumatisch-mechanische Lösung, die auch bei Stromausfall oder Fehlern im Steuermodul wirksam ist und die insbesondere in Anhängefahrzeugen zur Anwendung kommt.

Nach einem weiteren Gedanken der Erfindung kann der Federspeicherhaltedruck durch computerprogrammgesteuerte Regelung einer Ventilanordnung eingestellt werden. Mit einer programmgesteuerten Regelung ist eine genaue und reproduzierbare Einstellung möglich, insbesondere in einem elektropneumatischen Bremssystem. Auch kann nachträglich durch Anpassung der Programmsteuerung eine Änderung durchgeführt werden.

Das erfindungsgemäße Verfahren ist sowohl zum Betreiben eines Feststellbremssystems in Zugfahrzeugen bzw. Motorwagen, als auch in Anhängefahrzeugen vorteilhaft verwendbar.

Gegenstand der Erfindung ist auch ein Feststellbremssystem mit den Merkmalen des Anspruchs 8, für einen Motorwagen oder ein Anhängefahrzeug und insbesondere zur Durchführung des erfindungsgemäßen Verfahrens. Vorteilhafterweise umfasst das Feststellbremssystem eine Federspeicherbremse und ein Steuermodul, wobei letzteres an einen Bremskreis angeschlossen ist, welcher mit einem Vorratsdruck versorgt wird, und Federspeicherbremszylinder zur Einnahme einer Lösestellung der Federspeicherbremse mit einem Federspeicherhaltedruck beaufschlagbar sind. Erfindungsgemäß sind Mittel vorgesehen zur Einstellung des Federspeicherhaltedrucks auf einen Wert, der niedriger ist als der Vorratsdruck im Bremskreis. Dadurch kann das Feststellbremssystem die Federspeicherbremse deutlich schneller entlüften als bisher. Vorzugsweise handelt es sich um ein elektropneumatisches Feststellbremssystem und insbesondere um ein elektropneumatisches Steuermodul.

Nach einem weiteren Gedanken der Erfindung kann das Feststellbremssystem eine Ventilanordnung mit einem Eingangsdruck und einem Ausgangsdruck aufweisen, wobei die Ventilanordnung als Ausgangsdruck den Federspeicherhaltedruck bereitstellt. Eingangsdruck ist vorzugsweise der Vorratsdruck des betreffenden Bremskreises. Die Ventilanordnung ist dabei das Mittel zur Bestimmung oder Einstellung des Federspeicherhaltedrucks. Vorteilhafterweise ist oder enthält die Ventilanordnung zumindest ein Druckregelventil mit oder ohne Entlüftungsfunktion, alternativ ein Druckbegrenzungsventil oder ein Druckminderungsventil. Ziel ist jeweils die Bereitstellung des gewünschten Federspeicherhaltedrucks.

Nach einem weiteren Gedanken der Erfindung kann das Feststellbremssystem eine elektronische Steuereinrichtung aufweisen, mit der der Ausgangsdruck der Ventilanordnung regelbar ist. Elektronische Steuereinrichtung und Ventilanordnung wirken zur Regelung des Ausgangsdrucks zusammen.

Nach einem weiteren Gedanken der Erfindung kann das Feststellbremssystem einen Drucksensor zur Sensierung des Ausgangsdrucks und zur Weitergabe an die elektronische Steuereinrichtung aufweisen. Mit dem Drucksensor ist ein schneller Regelkreis realisierbar.

Nach einem weiteren Gedanken der Erfindung kann die Ventilanordnung ein pneumatisches Relaisventil und ein elektropneumatisches Proportionalventil aufweisen, wobei an einem Ausgang der Ventilanordnung der Ausgangsdruck anliegt, das Relaisventil Steuerdruck vom Proportionalventil erhält und das Proportionalventil von der elektronischen Steuereinrichtung zur Einstellung des Ausgangsdrucks angesteuert wird. Damit ist eine effektive Regelung des Ausgangsdrucks bei geringem apparativen Aufwand möglich. Das Proportionalventil kann auch durch ein getaktetes Schaltventil oder eine Anordnung aus getakteten Schaltventilen realisiert sein.

Nach einem weiteren Gedanken der Erfindung können Ventilanordnung und elektronische Steuereinrichtung Bestandteile des Steuermoduls sein. Dadurch wird eine hohe Integration der erforderlichen Bauteile erreicht.

Nach einem weiteren Gedanken der Erfindung kann die Ventilanordnung ein Druckbegrenzungsventil enthalten. Letzteres ermöglicht die Einstellung eines definierten Ausgangsdrucks ohne elektronische Komponenten. Es handelt sich um eine besonders robuste Lösung, vorzugsweise für rein pneumatische Feststellbremssysteme.

Nach einem weiteren Gedanken der Erfindung kann die Ventilanordnung ein zum Druckbegrenzungsventil parallel geschaltetes Rückschlagventil aufweisen. Dadurch ist eine Anpassung eines gegebenenfalls auftretenden höheren Ausgangsdrucks an einen niedrigeren Eingangsdruck möglich.

Nach einem weiteren Gedanken der Erfindung kann die Ventilanordnung in ein Steuermodul integriert sein. Dadurch wird ein zusätzliches Bauteil außerhalb des insbesondere elektropneumatischen Steuermoduls vermieden.

Nach einem weiteren Gedanken der Erfindung kann die Ventilanordnung in eine pneumatische Steuerleitung zwischen einer Parkventilanordnung und einem Steuermodul integriert sein. Diese Anordnung ermöglicht eine einfache Nachrüstung in ein vorhandenes Feststellbremssystem.

Nach einem weiteren Gedanken der Erfindung können Ventilanordnungen in Bremszylinderanordnungen integriert sein. Je Bremszylinder ist eine Ventilanordnung mit Druckbegrenzungsventil vorgesehen. Bei den Bremszylindern handelt es sich vorzugsweise um Kombibremszylinder mit Betriebsbremszylinder und Federspeicherbremszylinder. Der Aufwand ist höher als bei einer zentralen Ventilanordnung, bietet aber eine hohe Redundanz.

Nach einem weiteren Gedanken der Erfindung können Ventilanordnungen in pneumatische Arbeitsleitungen zwischen einem Steuermodul und Federspeicherbremszylindern integriert sein. Die Federspeicherbremszylinder können Bestandteile von Kombibremszylindern sein. Mit dieser Ausführung ist eine einfache Nachrüstung mit hoher Redundanz möglich.

Nach einem weiteren Gedanken der Erfindung handelt es sich bei dem Steuermodul um einen Achsmodulator. Diese Maßnahme verbessert die Integration und vermeidet das Erfordernis zusätzlichen Bauraums außerhalb der ohnehin vorhandenen Teile des Feststellbremssystems. Der Achsmodulator ist vorteilhafterweise zugleich Bestandteil eines Betriebsbremssystems und steuert auch eine Betriebsbremse.

Gegenstand der Erfindung ist gemäß Anspruch 22 auch ein Computerprogrammprodukt. Dieses umfasst insbesondere Befehle, die ausgeführt auf einer elektronischen Steuereinrichtung eines Steuermoduls in einem Feststellbremssystem, das erfindungsgemäße Verfahren ausführen.

Weiterhin Gegenstand der Erfindung ist ein elektropneumatisches Steuermodul gemäß Anspruch 23.

Schließlich ist Gegenstand der Erfindung gemäß Anspruch 24 auch ein Fahrzeug mit einem erfindungsgemäßen Feststellbremssystem.

Sämtliche Aspekte der Erfindung gelten für bzw. sind anwendbar für Zugfahrzeuge und Anhängefahrzeuge, soweit diese ein elektropneumatisches oder pneumatisches Feststellbremssystem aufweisen.

Weitere Merkmale der Erfindungen ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine schematische Darstellung eines elektropneumatischen Bremssystems in einem Zugfahrzeug,
- Fig. 2: ein elektropneumatisches Steuermodul eines elektropneumatischen Feststellbremssystems innerhalb des elektropneumatischen Bremssystems,
- Fig. 3: eine schematische Darstellung einer Ventilanordnung mit Druckbegrenzungsventil und Rückschlagventil,
- Fig. 4: eine stark vereinfachte Darstellung eines Feststellbremssystems in einem Anhängefahrzeug und mit einem Modulator mit integrierter Ventilanordnung gemäß Fig. 3,
- Fig. 5: eine Ausführungsform analog Fig. 4, jedoch mit in eine Steuerleitung zwischen einem Parkventil und dem Modulator integrierter Ventilanordnung,
- Fig. 6: eine Ausführungsform analog Fig. 4, jedoch mit in einem Parkventil integrierter Ventilanordnung,
- Fig. 7: eine Ausführungsform analog Fig. 4, jedoch mit in Kombibremszylinder integrierten Ventilanordnungen,
- Fig. 8: eine Ausführungsform analog Fig. 4, jedoch mit in Arbeitsleitungen zwischen Modulator und Federspeicherbremszylindern integrierten Ventilanordnungen,
- Fig. 9: eine qualitative Darstellung von zeitabhängigen Druckverläufen beim Entlüften von Federspeicherbremszylindern.

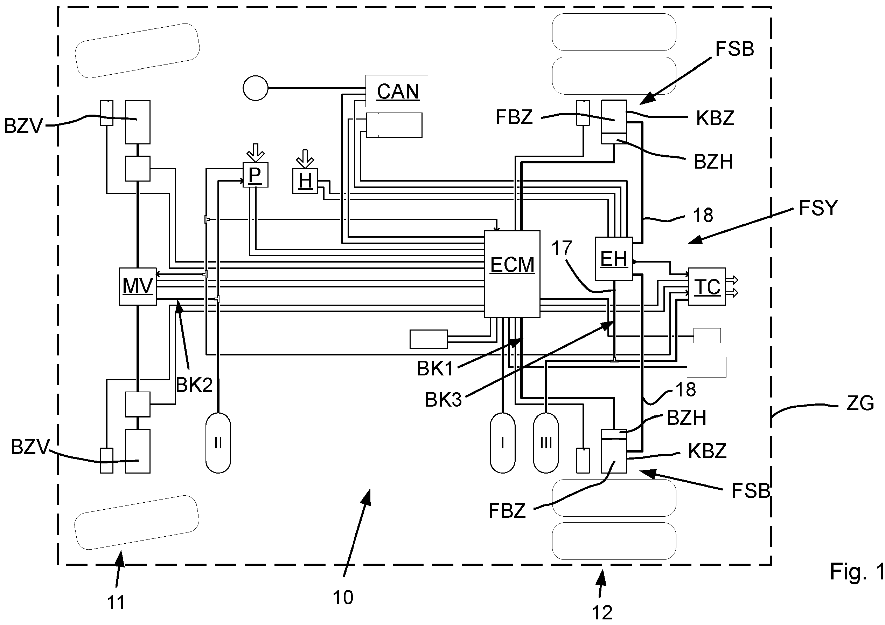

In Fig. 1 vereinfacht dargestellt ist ein elektropneumatisches Bremssystem 10 für ein Zugfahrzeug ZG mit Vorderachse 11 und Hinterachse 12. Der grundsätzliche Aufbau des Bremssystems 10 ist bekannt und ähnlich in der DE 10 2017 006 356 A1 offenbart.

Es werden nachfolgend nur die zum Verständnis der Erfindung relevanten Bestandteile berücksichtigt. Das Bremssystem 10 weist hier drei pneumatische Bremskreise BK1, BK2 und BK3 auf, jeweils mit einem Vorrat I, II, III. Kompressoren als Druckluftquellen sind nicht gezeigt, ebenso ein gegebenenfalls vorhandenes Mehrkreisschutzventil.

Im Bremskreis BK2 ist ein Achsmodulator MV für die Vorderachse 11 vorgesehen. Vorderachs-Betriebsbremszylinder BZV der Vorderachse 11 sind mit dem Achsmodulator MV verbunden.

Ein nicht näher dargestellter Achsmodulator für die Hinterachse 12 ist mit einem ebenfalls nicht näher gezeigten zentralen Steuergerät zusammengefasst zu einer Zentraleinheit ECM. Diese steuert auch den Achsmodulator MV für die Vorderachse 11.

Mit der Zentraleinheit ECM sind Kombibremszylinder KBZ verbunden, in die Hinterachs-Betriebsbremszylinder BZH und Federspeicherbremszylinder FSZ der Hinterachse 12 integriert sind. Zur pneumatischen Beaufschlagung der Hinterachs-Betriebsbremszylinder BZH ist die Zentraleinheit ECM an den Bremskreis BK1 angeschlossen bzw. Teil des desselben.

Zur Belüftung der Vorderachs-Betriebsbremszylinder BZV und Hinterachs-Betriebsbremszylinder BZH kann der Fahrer einen Bremswertgeber P (Bremspedal) betätigen. Ein entsprechendes Signal des Bremswertgebers P gelangt zur Zentraleinheit ECM. Diese steuert den integrierten Achsmodulator für die Hinterachse 12 und den vorderen Achsmodulator MV an.

Die Federspeicherbremszylinder FSZ sind Bestandteil einer Federspeicherbremse FSB innerhalb eines Feststellbremssystems FSY, welches ein Subsystem des elektropneumatischen Bremssystems 10 ist und mit einem elektropneumatischen Steuermodul EH versehen ist. Das Steuermodul EH ist an den Bremskreis BK3 angeschlossen und gibt bei gelöster Federspeicherbremse FSB einen Ausgangsdruck zum Belüften der Federspeicherbremszylinder FBZ aus. Zum Entlüften der Federspeicherbremszylinder FBZ und damit zur Betätigung der Federspeicherbremse FSB ist ein mit dem Steuermodul EH verbundener elektrischer Schalter H vorgesehen, welcher ebenso wie der Bremswertgeber P vom Fahrer bedienbar ist.

Mit dem elektropneumatischen Steuermodul EH verbunden ist auch ein Anhängersteuermodul TC, welches aus dem Bremskreis BK3 gespeist wird, in dieser Figur aber keine Bedeutung hat.

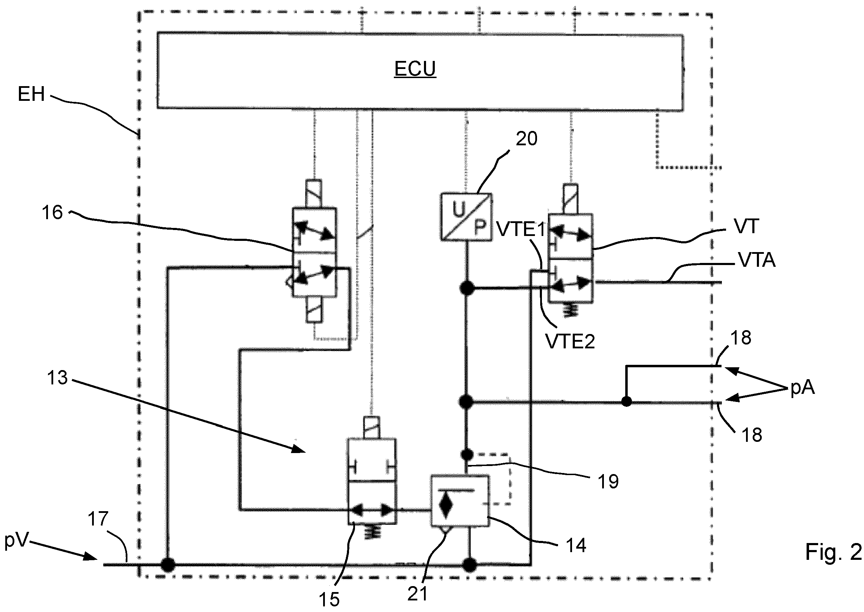

Im elektropneumatischem Steuermodul EH sind gemäß Fig. 2 insbesondere eine elektronische Steuereinrichtung ECU und eine Ventilanordnung 13 vorgesehen, wobei die Ventilanordnung 13 von der Steuereinrichtung ECU gesteuert wird.

Das elektropneumatische Bremssystem 10 ist an einen CAN-Bus des Fahrzeugs ZG angeschlossen, siehe CAN in Fig. 1 oder an ein anderes fahrzeugtypisches Bussystem. Über den CAN-Bus können die Zentraleinheit ECM, das elektropneumatische Steuermodul EH und weitere, nicht gezeigte elektronische Steuereinheiten des Fahrzeugs ZG miteinander kommunizieren und beispielsweise auch Befehle zur Betätigung der Federspeicherbremsen FSB an das elektropneumatische Steuermodul EH übersenden. Außerdem kann die elektronische Steuereinrichtung ECU im Steuermodul EH eine Software aufweisen, die unter definierten Randbedingungen und/oder Eingang definierter Signale die Federspeicherbremse FSB betätigt oder löst bzw. die Federspeicherbremszylinder FBZ entlüftet oder belüftet.

In Fig. 2 ist ein möglicher Aufbau des elektropneumatischen Steuermoduls EH dargestellt. Hauptbestandteile der Ventilanordnung 13 sind ein Relaisventil 14 und ein elektropneumatisches Proportionalventil 15. Dem Proportionalventil 15 vorgeordnet ist ein bistabiles Schaltventil 16, mit dem die Federspeicherbremse FSB aktiviert oder deaktiviert wird. Hierzu verbindet das Schaltventil 16 das Proportionalventil 15 mit einem Eingang 17 des Steuermoduls EH oder sperrt diese Verbindung. In der Stellung gemäß Fig. 2 ist die Verbindung gesperrt und die Federspeicherbremse FSB wird entlüftet, also aktiviert.

Am Eingang 17 des Steuermoduls EH liegt Vorratsdruck pV aus dem Bremskreis BK3 an. An Ausgängen 18 des Steuermoduls EH wird Ausgangsdruck pA für die Federspeicherbremszylinder FBZ bereitgestellt. Das Relaisventil 14 ist mit dem Eingang 17 und über seinen Ventilausgang 19 mit den Ausgängen 20 verbunden und erhält Steuerdruck vom Proportionalventil 15.

Das Proportionalventil 15 ist hier ein 2/2-Wegeventil, welches stromlos durchgeschaltet ist und bestromt schließt. Durch Modulation des Proportionalventils 15 kann ein bestimmter Steuerdruck für das Relaisventil 14 und so auch ein bestimmter Ausgangsdruck pA an den Ausgängen 18 zum Belüften der Federspeicherbremszylinder FBZ eingestellt werden. Das Relaisventil 14 bildet so zusammen mit dem Proportionalventil 15 ein Druckregelventil für den Ausgangsdruck pA.

Mit den Ausgängen 18 und mit dem Relaisventil 14 ist ein Drucksensor 20 verbunden, dessen Signale von der elektronischen Steuereinrichtung ECU empfangen und verarbeitet werden. Ein Ventilausgang VTA eines hier monostabilen Schaltventils VT ist mit dem Anhängersteuermodul TC verbunden. Ein erster Ventileingang VTE1 ist mit Vorratsdruck pV beaufschlagt, während ein zweiter Ventileingang VTE2 mit dem Ventilausgang 19 verbunden ist. Dadurch ist es möglich, den Ventilausgang VTA und das Anhängersteuermodul TC unter Vorratsdruck pV zu halten, während eine Druckregelung über das Relaisventil 14 für die Ausgänge 18 stattfindet. Dies unterbindet vorteilhaft eine Auswirkung der Druckregelung auf den Druck an einem nicht gezeigten Ausgang des Anhängersteuermoduls TC.

Die elektronische Steuereinrichtung ECU steuert den an den Ausgängen 18 anliegenden Ausgangsdruck pA durch Betätigung der Ventile 15, 16 unter Berücksichtigung der Signale des Drucksensors 20. Zum Lösen der Federspeicherbremse FSB bzw. Belüften der Federspeicherbremszylinder FBZ wird das Schaltventil 16 in eine nicht gezeigte Durchlassstellung geschaltet und das Proportionalventil 15 moduliert. Ziel ist ein Federspeicherhaltedruck pH als Ausgangsdruck pA an den Ausgängen 18, welcher niedriger ist als der Vorratsdruck pV am Eingang 17 und höher als ein Federspeicherlösedruck pL. Vorzugsweise beträgt der Federspeicherhaltedruck pH 1 bis 2 bar mehr als der Federspeicherlösedruck pL und/oder 1 bis 3 bar weniger als der Vorratsdruck pV.

Das Entlüften der Federspeicherbremszylinder FBZ zum Betätigen der Federspeicherbremse FSB erfolgt in diesem Fall über eine Entlüftung 21 am Relaisventil 14 oder eine damit verbundene Entlüftung. Ausgehend vom relativ niedrigen Federspeicherhaltedruck pH kann die Federspeicherbremse FSB deutlich schneller entlüftet werden als bei einem Ausgangsdruck pA, der dem Vorratsdruck pV im Bremskreis BK3 entspricht.

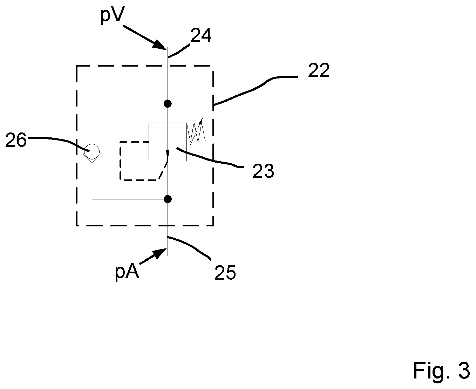

Fig. 3 zeigt eine weitere Ventilanordnung 22 zur Reduzierung des Ausgangsdrucks pA, hier als rein pneumatisch-mechanische Lösung. Hauptbestandteil der Ventilanordnung 22 ist ein Druckbegrenzungsventil 23 mit Eingang 24 und Ausgang 25. Ein Rückschlagventil 26 ist zum Druckbegrenzungsventil 23 parallel geschaltet, also ebenfalls mit Eingang 24 und Ausgang 25 verbunden.

Das Druckbegrenzungsventil 23 ist so eingestellt und/oder ausgewählt, dass am Ausgang 25 der gewünschte Ausgangsdruck pA und nicht der höhere Vorratsdruck pV anliegt. Das Rückschlagventil 26 gleicht den Druck am Ausgang 25 aus, falls der Druck am Eingang 24 absinkt.

Die Ventilanordnung 22 ist vorzugsweise verwendbar in einem Feststellbremssystem FSY mit rein pneumatisch gesteuerter Federspeicherbremse FSB. Möglich ist aber auch eine Verwendung in einem elektropneumatischen Feststellbremssystem FSY.

Besondere Vorteile für die Verwendung in einem Anhängefahrzeug bestehen in der schnelleren Aktivierung der Federspeicherbremse FSB, auch als Notbremse, und eine Reduzierung der Gefahr des unbeabsichtigten Wegrollens des Anhängerfahrzeugs beim Abkoppeln, da der Übergang von der Bremswirkung der Betriebsbremse zur Federspeicherbremse FSB schneller abläuft.

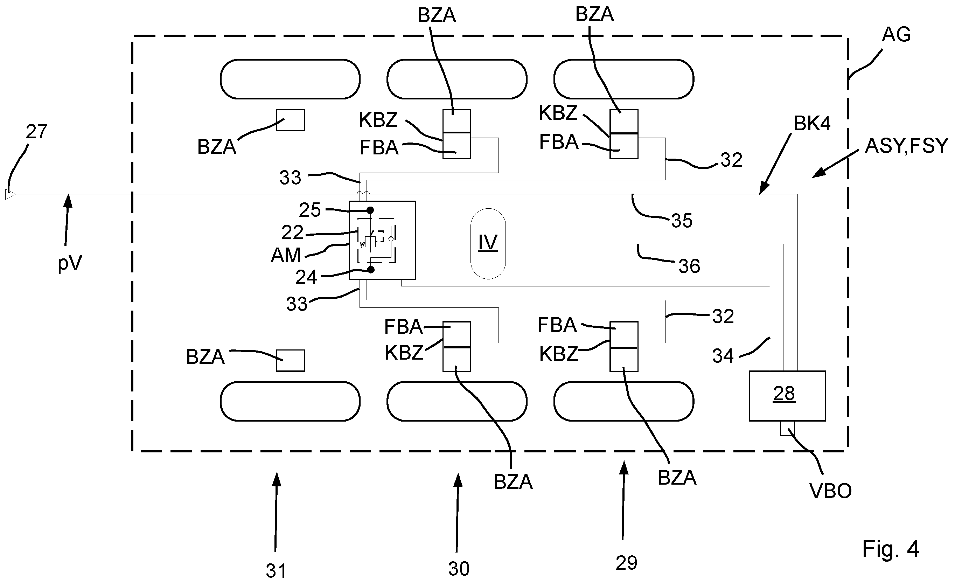

Das Ausführungsbeispiel der Fig. 4 bezieht sich auf ein Anhängerbremssystem ASY in einem Anhängefahrzeug AG, etwa einem Auflieger. Bestandteile des Anhängerbremssystems ASY sind ein Vorratsanschluss 27, ein Parkventil 28, auch als Parklöseventil bezeichnet, ein Vorrat IV, ein Modulator AM, Kombibremszylinder KBZ an zwei Achsen 29, 30, während eine weitere Achse 31 nur Anhänger-Betriebsbremszylinder BZA aufweist. Die Kombibremszylinder KBZ sind, ebenso wie im Ausführungsbeispiel der Fig. 1, unterteilt in Anhänger-Betriebsbremszylinder BZA und Anhänger-Federspeicherbremszylinder FBA.

Bestandteil des Anhängerbremssystems ASY ist auch hier ein elektropneumatisches Feststellbremssystem FSY, welches die Anhänger-Federspeicherbremszylinder FBA einschließt. Zur Vereinfachung sind in Fig. 4 nur Leitungen eingezeichnet, die im Zusammenhang mit dem Federspeicherbremssystem FSY von Bedeutung sind. Auch ist eine Zufuhr und Verteilung von Steuerdruck analog zum Vorratsanschluss 27 nicht dargestellt. Das Feststellbremssystem FSY kann auch rein pneumatisch sein.

Der Modulator AM regelt sämtliche Funktionen des Anhängerbremssystems ASY, einschließlich des Feststellbremssystems FSY für das Anhängerfahrzeug AG und enthält alle hierfür erforderlichen Ventilanordnungen und Steuereinrichtungen. Im Ausführungsbeispiel der Fig. 4 ist in den Modulator AM die Ventilanordnung 22 integriert, also Bestandteil des Modulators AM. Am Eingang 24 liegt der über das Parkventil 28 zugeführte Vorratsdruck pV an. Der Ausgang 25 ist mit Leitungen 32, 33 zu den Anhänger-Federspeicherbremszylindern FBA verbunden. Vom Vorratsanschluss 27 führt eine Vorratsleitung 35 zum Parkventil 28. Eine weitere Vorratsleitung 36 verläuft vom Parkventil 28 zum Vorrat IV und von dort zum Modulator AM. Alternativ kann der Modulator AM zwischen Vorrat IV und Parkventil 28 geschaltet sein.

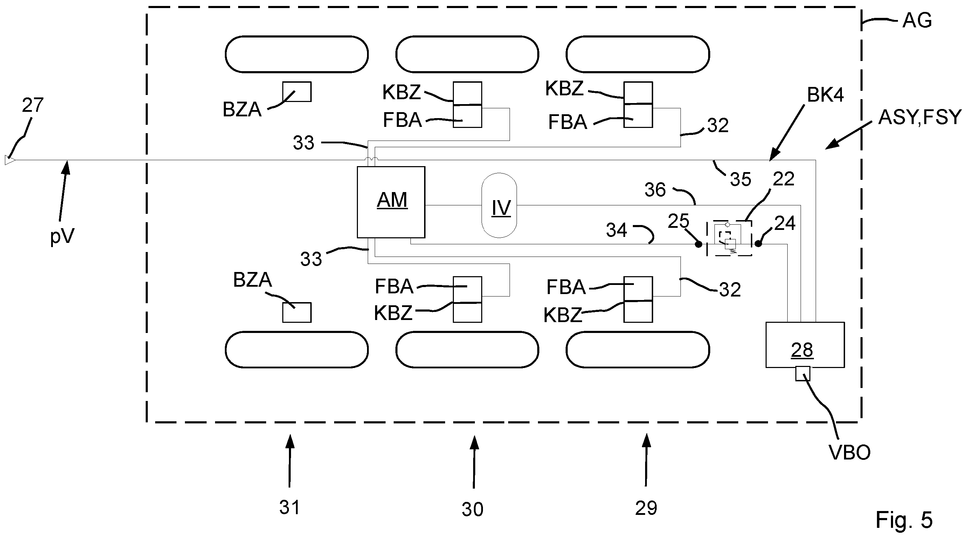

Im Ausführungsbeispiel der Fig. 5 ist die Ventilanordnung 22 in eine Steuerleitung 34 vom Parkventil 28 zum Modulator AM geschaltet. Der Eingang 24 ist dem Parkventil 28 zugewandt, während der Ausgang 25 in Richtung auf das Modul AM weist. Die Ventilanordnung 22 kann auf diese Weise einfach nachgerüstet werden.

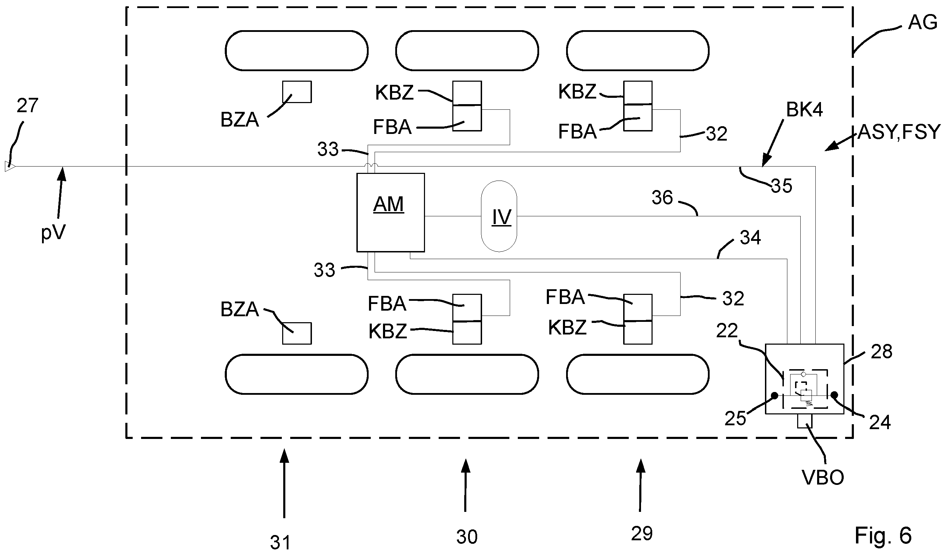

Im Ausführungsbeispiel der Fig. 6 ist die Ventilanordnung 22 in das Parkventil 28 integriert, bzw. Teil desselben. Die Verschaltung von Eingang 24 und Ausgang 25 ist nicht dargestellt. Vorzugsweise ist der Ausgang 25 mit der Steuerleitung 34 verbunden. Der Eingang 24 ist innerhalb des Moduls AM mit einer Vorratsdruck pV führenden, nicht gezeigten Leitung, mit einer mit dem Vorrat IV verbundenen, nicht gezeigten Leitung oder mit einer nicht gezeigten Entlüftungsöffnung verbunden. Welche Verbindung konkret besteht, ist abhängig von der Position eines manuellen Betätigungsorgans VBO am Parkventil 28 und erfordert nur geringen zusätzlichen Aufwand innerhalb des Parkventils 28.

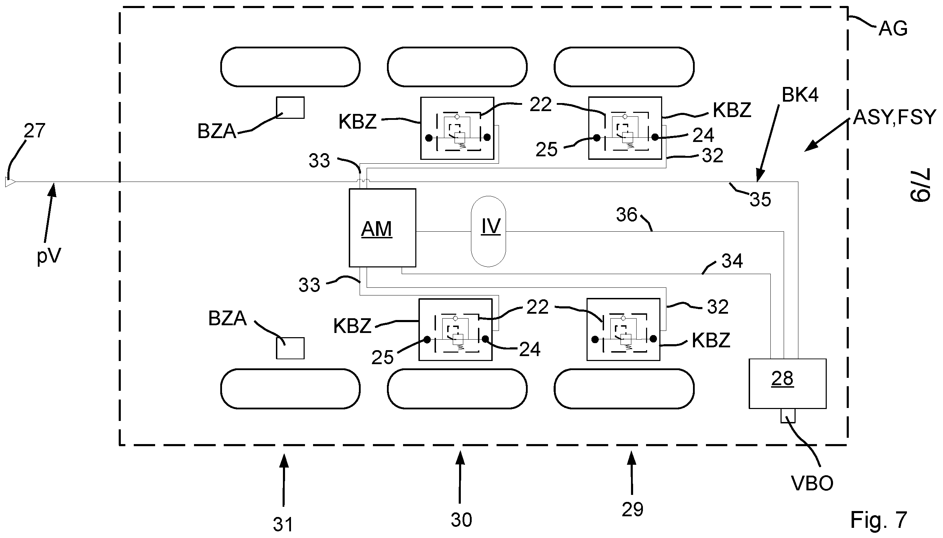

Im Ausführungsbeispiel der Fig. 7 ist in jeden Kombibremszylinder KBZ eine Ventilanordnung 22 integriert. Die Eingänge 24 können mit den Leitungen 32, 33 verbunden sein, während die Ausgänge 25 mit den Anhänger-Federspeicherbremszylindern FBA verbunden sind. Letztere sind zur Vereinfachung in Fig. 7 nicht eingezeichnet aber beispielsweise in Fig. 4 ersichtlich. Gemäß Fig. 7 sind die Ventilanordnungen 22 in alle vorhandenen Kombibremszylinder KBZ integriert. Möglich ist auch eine Auswahl bzw. Beschränkung auf einzelne Achsen 29, 30 oder Räder.

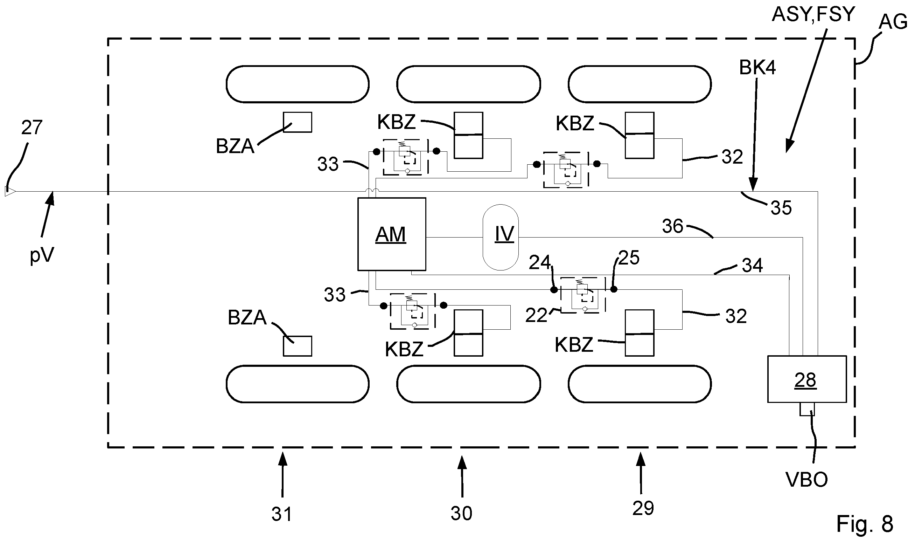

Im Ausführungsbeispiel der Fig. 8 sind Ventilanordnungen 22 in jeder der Leitungen 32, 33 zwischen dem Modulator AM und den Kombibremszylindern KBZ angeordnet. Dabei sind die Eingänge 24 mit dem Modulator AM verbunden und die Ausgänge 25 mit den Anhänger-Federspeicherbremszylindern FBA innerhalb der Kombibremszylinder KBZ. Auch diese Lösung eignet sich besonders gut für eine Nachrüstung.

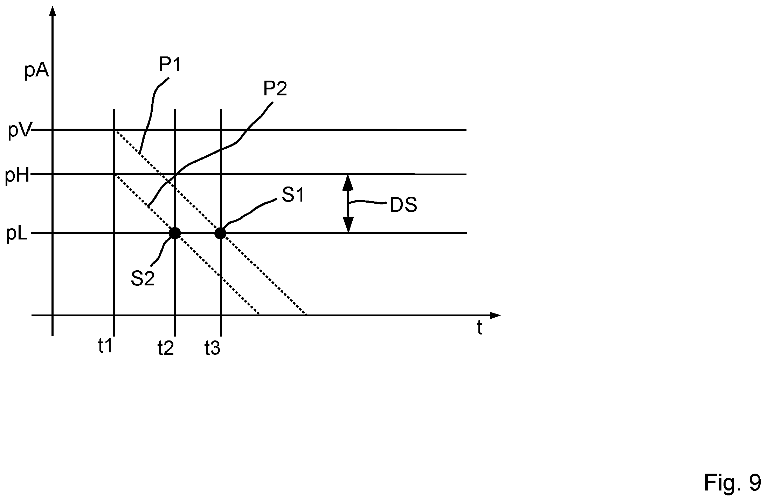

Aus Fig. 9 ist ein wesentlicher Vorteil der Erfindung ersichtlich. Erkennbar ist der zeitliche Verlauf des Ausgangsdrucks pA über der Zeit t. Im Stand der Technik sind die belüfteten Federspeicherbremszylinder FBZ und Anhänger-Federspeicherbremszylinder FBA mit Vorratsdruck pV beaufschlagt. Erfindungsgemäß weisen die Ventilanordnungen 13, 22 einen Ausgangsdruck pA in Höhe des Federspeicherhaltedrucks pH auf. Der Federspeicherhaltedruck pH liegt unterhalb des Vorratsdrucks pV und mit einem Sicherheitsabstand DS oberhalb des Federspeicherlösedrucks pL. Dargestellt sind zwei verschiedene Fälle mit ihren Druckverlaufslinien P1, P2.

Im ersten Fall ausgehend vom Vorratsdruck pV und im zweiten Fall ausgehend vom Federspeicherhaltedruck pH ergibt sich beim Entlüften der Federspeicherbremszylinder FBZ und Anhänger-Federspeicherbremszylinder FBA der mögliche zeitliche Verlauf entsprechend der gestrichelten Druckverlaufslinien P1 und P2. Von Interesse sind Schnittpunkte S1, S2 der Druckverlaufslinien P1 und P2 mit dem Federspeicherlösedruck pL. Während die Druckverlaufslinie P1 den Federspeicherlösedruck pL im Schnittpunkt S1 erst zum Zeitpunkt t3 erreicht, liegt der Schnittpunkt S2 über dem deutlich früheren Zeitpunkt t2. Entsprechend ist eine sich im Zusammenhang mit der Erfindung ergebende Federspeicherlösezeit t2 - t1 deutlich kleiner als die bisher mögliche Federspeicherlösezeit t3 - t1.

Der erwähnte Sicherheitsabstand DS ist so auszuwählen, dass Streuungen des Federspeicherlösedrucks pL und nachträgliche Schwankungen durch Verschleiß und Korrosion berücksichtigt werden, so dass der Federspeicherhaltedruck pH den Federspeicherlösedruck pL nie erreicht oder unterschreitet.

Die Darstellung in Fig. 9 ist idealisiert, rein qualitativ und dient nur der Erläuterung der verkürzten Zeit bis zum Erreichen des Federspeicherlösedrucks pL.

Alle hier dargestellten Ausführungsbeispiele beziehen sich sowohl auf die Verwendung in einer Zugmaschine/einem Motorwagen als auch in einem Anhängefahrzeug, insbesondere Sattelauflieger, oder sind darauf übertragbar.

**Bezugszeichenliste (Teil der Beschreibung)**

| | | | |
|---|---|---|---|
| 10 | elektropneumatisches Bremssystem | AG | Anhängefahrzeug |
| | | AM | Modulatoranhänger |
| 11 | Vorderachse | ASY | Anhängerbremssystem |
| 12 | Hinterachse | BK1 | Bremskreis |
| 13 | Ventilanordnung | BK2 | Bremskreis |
| 14 | Relaisventil | BK3 | Bremskreis |
| 15 | Proportionalventil | BK4 | Bremskreis |
| 16 | Schaltventil | BZA | Anhänger-Betriebsbremszylinder |
| 17 | Eingang | BZH | Hinterachs-Betriebsbremszylinder |
| 18 | Ausgänge | BZV | Vorderachs-Betriebsbremszylinder |
| 19 | Ventilausgang | CAN | Bussystem |
| 20 | Drucksensor | DS | Sicherheitsabstand |
| 21 | Entlüftung | ECM | Zentraleinheit |
| 22 | Ventilanordnung | ECU | elektronische Steuereinrichtung |
| 23 | Druckbegrenzungsventil | EH | elektropneumatisches Steuermodul |
| 24 | Eingang | | |
| 25 | Ausgang | FBA | Anhänger-Federspeicherbremszylinder |
| 26 | Rückschlagventil | | |
| 27 | Vorratsanschluss | FBZ | Federspeicherbremszylinder |
| 28 | Parkventil | FSB | Federspeicherbremse |
| 29 | Achse | FSY | Feststellbremssystem |
| 30 | Achse | H | elektrischer Schalter |
| 31 | Achse | KBZ | Kombibremszylinder |
| 32 | Leitungen | MV | Achsmodulator Vorderachse |
| 33 | Leitungen | P | Bremswertgeber |
| 34 | Steuerleitung | P1 | Druckverlauf |
| 35 | Vorratsleitung | P2 | Druckverlauf |
| 36 | Vorratsleitung | pA | Ausgangsdruck |
| I | Vorrat | pH | Federspeicherhaltedruck |
| II | Vorrat | pL | Federspeicherlösedruck |
| III | Vorrat | pV | Vorratsdruck |
| IV | Vorrat | S1 | Schnittpunkt |
| S2 | Schnittpunkt | | |
| t1 | Zeitpunkt | | |
| t2 | Zeitpunkt | | |
| t3 | Zeitpunkt | | |
| TC | Anhängersteuermodul | | |
| VBO | Betätigungsorgan am Parkventil | | |
| VT | Ventil | | |
| VTA | Ventilausgang | | |
| VTE1 | Ventileingang | | |
| VTE2 | Ventileingang | | |
| ZG | Zugfahrzeug | | |

## Patentansprüche

1. Verfahren zum Betreiben eines Feststellbremssystems (FSY) mit Federspeicherbremse (FSB) und Steuermodul (EH, AM), in einem Motorwagen (ZG) oder Anhängefahrzeug (AG), wobei das Steuermodul (EH, AM) an einen Feststellbremskreis (BK3, BK4) angeschlossen ist, der Feststellbremskreis (BK3, BK4) mit einem Vorratsdruck (pV) versorgt wird und Federspeicherbremszylinder (FBA, FBZ) zur Einnahme einer Lösestellung der Federspeicherbremse (FSB) mit einem Druck beaufschlagt werden, **dadurch gekennzeichnet, dass** der Druck, mit dem die Federspeicherbremszylinder (FBA, FBZ) zur Einnahme der Lösestellung beaufschlagt werden, ein Federspeicherhaltedruck (pH) ist, der niedriger ist als der Vorratsdruck (pV) im Feststellbremskreis (BK3, BK4) und der höher ist als der Federspeicherlösedruck (pL) des Feststellbremssystems.

2. Verfahren nach Anspruch 1, **dadurch gekennzeichnet, dass** der Federspeicherhaltedruck (pH) 1-5 bar unter dem Vorratsdruck (pV) liegt.

3. Verfahren nach Anspruch 2, **dadurch gekennzeichnet, dass** der Federspeicherhaltedruck (pH) 1,5-3 bar unter dem Vorratsdruck (pV) liegt.

4. Verfahren nach einem der Ansprüche 1-3, **dadurch gekennzeichnet, dass** der Federspeicherhaltedruck (pH) um mindestens einen Sicherheitsabstand (DS) über einem Federspeicherlösedruck (pL) liegt.

5. Verfahren nach Anspruch 4, **dadurch gekennzeichnet, dass** der Sicherheitsabstand (DS) mindestens 1-2 bar beträgt.

6. Verfahren nach einem der Ansprüche 1-5, **dadurch gekennzeichnet, dass** der Federspeicherhaltedruck (pH) durch eine druckbegrenzend, druckmindernd oder druckregelnd wirkende Ventilanordnung (13, 22) bestimmt wird.

7. Verfahren nach einem der Ansprüche 1-6, **dadurch gekennzeichnet, dass** der Federspeicherhaltedruck (pH) durch computerprogrammgesteuerte Regelung einer Ventilanordnung (13) eingestellt wird.

8. Feststellbremssystem (FSY) mit Federspeicherbremse (FSB) und Steuermodul (EH, AM), für einen Motorwagen (FG) oder ein Anhängefahrzeug (AG), wobei das Steuermodul (EH, AM) an einen Bremskreis (BK3, BK4) angeschlossen ist, der Bremskreis (BK3, BK4) mit einem Vorratsdruck (pV) versorgt wird und Federspeicherbremszylinder (FBA, FBZ) zur Einnahme einer Lösestellung der Federspeicherbremse (FSB) mit einem Druck beaufschlagbar sind, **gekennzeichnet durch** Mittel (13, 22) zur Einstellung eines Federspeicherhaltedrucks (pH) als Druck zur Einnahme der Lösestellung, mit einem Wert, der niedriger ist als der Vorratsdruck (pV) im Bremskreis (BK3, BK4), und höher ist als der Federspeicherlösedruck des Feststellbremssystems.

9. Feststellbremssystem (FSY) nach Anspruch 8, **gekennzeichnet durch** eine Ventilanordnung (13, 22) mit einem Eingangsdruck (pV) und einem Ausgangsdruck (pA), wobei die Ventilanordnung (13, 22) als Ausgangsdruck (pA) den Federspeicherhaltedruck (pH) bereitstellt.

10. Feststellbremssystem (FSY) nach Anspruch 9, **gekennzeichnet durch** eine elektronische Steuereinrichtung (ECU) mit der der Ausgangsdruck (pA) der Ventilanordnung (13) regelbar ist.

11. Feststellbremssystem (FSY) nach Anspruch 10, **gekennzeichnet durch** einen Drucksensor (20) zur Sensierung des Ausgangsdrucks (pA) und zur Weitergabe an die elektronische Steuereinrichtung (ECU).

12. Feststellbremssystem (FSY) nach Anspruch 10 oder 11, **dadurch gekennzeichnet, dass** die Ventilanordnung (13) ein pneumatisches Relaisventil (14) und ein elektropneumatisches Proportionalventil (15) aufweist, dass an einem Ausgang (18, 19) der Ventilanordnung (13) der Ausgangsdruck (pA) anliegt, dass das Relaisventil (14) Steuerdruck vom Proportionalventil (15) erhält, und dass das Proportionalventil (15) von der elektronischen Steuereinrichtung (ECU) zur Einstellung des Ausgangsdrucks (pA) angesteuert wird.

13. Feststellbremssystem (FSY) nach einem der Ansprüche 10 bis 12, **dadurch gekennzeichnet, dass** Ventilanordnung (13) und elektronische Steuereinrichtung (ECU) Bestandteile eines Steuermoduls (EH) sind.

14. Feststellbremssystem (FSY) nach einem der Ansprüche 9 bis 13, **dadurch gekennzeichnet, dass** die Ventilanordnung (22) ein Druckbegrenzungsventil (23) enthält.

15. Feststellbremssystem (FSY) nach Anspruch 14, **dadurch gekennzeichnet, dass** die Ventilanordnung (22) ein zum Druckbegrenzungsventil (23) parallel geschaltetes Rückschlagventil (26) aufweist.

16. Feststellbremssystem (FSY) nach einem der Ansprüche 9 bis 15, **dadurch gekennzeichnet, dass** die Ventilanordnung (22) in ein Steuermodul (AM) integriert ist.

17. Feststellbremssystem (FSY) nach einem der Ansprüche 9 bis 15, **dadurch gekennzeichnet, dass** die Ventilanordnung (22) in eine pneumatische Steuerleitung (34) zwischen einer Parkventilanordnung (28) und einem Steuermodul (AM) integriert ist.

18. Feststellbremssystem (FSY) nach einem der Ansprüche 9 bis 15, **dadurch gekennzeichnet, dass** die Ventilanordnung (22) in eine Parkventilanordnung (28) integriert ist, welche über eine pneumatische Steuerleitung (34) mit einem Steuermodul (AM) verbunden ist.

19. Feststellbremssystem (FSY) nach einem der Ansprüche 9 bis 15, **dadurch gekennzeichnet, dass** Ventilanordnungen (22) in Bremszylinderanordnungen (KBZ) integriert sind.

20. Feststellbremssystem (FSY) nach einem der Ansprüche 9 bis 15, **dadurch gekennzeichnet, dass** Ventilanordnungen (22) in pneumatische Arbeitsleitungen (32, 33) zwischen einem Steuermodul (AM) und Federspeicherbremszylindern (FBA) integriert sind.

21. Feststellbremssystem (FSY) nach einem der Ansprüche 8 bis 20, **dadurch gekennzeichnet, dass** das Steuermodul (AM) ein Achsmodulator ist.

22. Computerprogrammprodukt, welches Befehle umfasst, die, ausgeführt auf einer elektronischen Steuereinrichtung (ECU) eines Steuermoduls (EH, AM) in einem Feststellbremssystem (FSY), das Verfahren nach Anspruch 7 ausführen.

23. Elektropneumatisches Steuermodul (EH, AM) mit einer elektronischen Steuereinrichtung (ECU) mit den Merkmalen der elektronischen Steuereinrichtung des Feststellbremssystems (FSY) nach einem der Ansprüche 10 bis 21.

24. Fahrzeug (ZG, AG) mit einem Feststellbremssystem (FSY) nach einem der Ansprüche 8 bis 21.

## Claims

1. Method for operating a parking brake system (FSY) in a motor vehicle (ZG) or trailer vehicle (AG), the parking brake system having a spring-loaded brake (FSB) and control module (EH, AM), the control module (EH, AM) being connected to a parking brake circuit (BK3, BK4), the parking brake circuit (BK3, BK4) being provided with a supply pressure (pV), and spring brake actuators (FBA, FBZ) being applied with pressure in order to assume a release position of the spring-loaded brake (FSB), **characterized in that** the pressure with which the spring brake actuators (FBA, FBZ) are applied in order to assume the release position is a spring brake holding pressure (pH) which is lower than the supply pressure (pV) in the parking brake circuit (BK3, BK4) and higher than the spring brake release pressure (pL) of the parking brake system.

2. Method according to claim 1, **characterized in that** the spring brake holding pressure (pH) is 1-5 bar below the supply pressure (pV).

3. Method according to claim 2, **characterized in that** the spring brake holding pressure (pH) is 1.5-3 bar below the supply pressure (pV).

4. Method according to any of claims 1-3, **characterized in that** the spring brake holding pressure (pH) is above a spring brake release pressure (pL) by at least a safety margin (DS).

5. Method according to claim 4, **characterized in that** the safety margin (DS) is at least 1-2 bar.

6. Method according to any of claims 1-5, **characterized in that** the spring brake holding pressure (pH) is determined by a pressure-limiting, pressure-reducing or pressure-regulating valve assembly (13, 22).

7. Method according to any of claims 1-6, **characterized in that** the spring brake holding pressure (pH) is set by computer program-controlled regulation of a valve assembly (13).

8. Parking brake system (FSY) for a motor vehicle (FG) or a trailer vehicle (AG), the parking brake system having a spring-loaded brake (FSB) and control module (EH, AM), the control module (EH, AM) being connected to a brake circuit (BK3, BK4), the brake circuit (BK3, BK4) being provided with a supply pressure (pV), and it being possible for spring brake actuators (FBA, FBZ) to be applied with pressure in order to assume a release position of the spring-loaded brake (FSB), **characterized by** means (13, 22) for setting a spring brake holding pressure (pH) as the pressure for assuming the release position, with a value which is lower than the supply pressure (pV) in the brake circuit (BK3, BK4) and higher than the spring brake release pressure of the parking brake system.

9. Parking brake system (FSY) according to claim 8, **characterized by** a valve assembly (13, 22) having an inlet pressure (pV) and an outlet pressure (pA), the valve assembly (13, 22) providing the spring brake holding pressure (pH) as the outlet pressure (pA).

10. Parking brake system (FSY) according to claim 9, **characterized by** an electronic control unit (ECU) by means of which the output pressure (pA) of the valve assembly (13) can be regulated.

11. Parking brake system (FSY) according to claim 10, **characterized by** a pressure sensor (20) for sensing the output pressure (pA) and for transmitting it to the electronic control unit (ECU).

12. Parking brake system (FSY) according to claim 10 or 11,
**characterized in that** the valve assembly (13) comprises a pneumatic relay valve (14) and an electropneumatic proportional valve (15), **in that** the output pressure (pA) is present at an output (18, 19) of the valve assembly (13), **in that** the relay valve (14) receives control pressure from the proportional valve (15), **and in that** the proportional valve (15) is actuated by the electronic control unit (ECU) in order to set the output pressure (pA).

13. Parking brake system (FSY) according to any of claims 10 to 12, **characterized in that** the valve assembly (13) and electronic control unit (ECU) are components of a control module (EH).

14. Parking brake system (FSY) according to any of claims 9 to 13, **characterized in that** the valve assembly (22) contains a pressure-limiting valve (23).

15. Parking brake system (FSY) according to claim 14, **characterized in that** the valve assembly (22) comprises a non-return valve (26) which is connected in parallel to the pressure-limiting valve (23).

16. Parking brake system (FSY) according to any of claims 9 to 15, **characterized in that** the valve assembly (22) is integrated into a control module (AM).

17. Parking brake system (FSY) according to any of claims 9 to 15, **characterized in that** the valve assembly (22) is integrated into a pneumatic control line (34) between a parking valve assembly (28) and a control module (AM).

18. Parking brake system (FSY) according to any of claims 9 to 15, **characterized in that** the valve assembly (22) is integrated into a parking valve assembly (28) which is connected to a control module (AM) via a pneumatic control line (34).

19. Parking brake system (FSY) according to any of claims 9 to 15, **characterized in that** valve assemblies (22) are integrated into braking actuator assemblies (KBZ).

20. Parking brake system (FSY) according to any of claims 9 to 15, **characterized in that** valve assemblies (22) are integrated into pneumatic working lines (32, 33) between a control module (AM) and spring brake actuators (FBA).

21. Parking brake system (FSY) according to any of claims 8 to 20, **characterized in that** the control module (AM) is an axle modulator.

22. Computer program product comprising instructions which, when executed on an electronic control unit (ECU) of a control module (EH, AM) in a parking brake system (FSY), execute the method according to claim 7.

23. Electropneumatic control module (EH, AM) having an electronic control unit (ECU) having the features of the electronic control unit of the parking brake system (FSY) according to any of claims 10 to 21.

24. Vehicle (ZG, AG) having a parking brake system (FSY) according to any of claims 8 to 21.

## Revendications

1. Procédé permettant de faire fonctionner un système de frein de stationnement (FSY) comportant un frein à accumulateur à ressort (FSB) et un module de commande (EH, AM), dans un véhicule automobile (ZG) ou un véhicule remorqué (AG), dans lequel le module de commande (EH, AM) est connecté à un circuit de frein de stationnement (BK3, BK4), le circuit de frein de stationnement (BK3, BK4) est alimenté en pression de réserve (pV) et des cylindres de frein à accumulateur à ressort (FBA, FBZ) sont sollicités par une pression pour prendre une position de desserrage du frein à accumulateur à ressort (FSB), **caractérisé en ce que** la pression par laquelle les cylindres de frein à accumulateur à ressort (FBA, FBZ) sont sollicités pour prendre la position de desserrage est une pression de maintien d'accumulateur à ressort (pH) qui est inférieure à la pression de réserve (pV) dans le circuit de frein de stationnement (BK3, BK4) et qui est supérieure à la pression de desserrage d'accumulateur à ressort (pL) du système de frein de stationnement.

2. Procédé selon la revendication 1, **caractérisé en ce que** la pression de maintien d'accumulateur à ressort (pH) est inférieure de 1 à 5 bar à la pression de réserve (pV).

3. Procédé selon la revendication 2, **caractérisé en ce que** la pression de maintien d'accumulateur à ressort (pH) est inférieure de 1,5 à 3 bar à la pression de réserve (pV).

4. Procédé selon l'une des revendications 1 à 3, **caractérisé en ce que** la pression de maintien d'accumulateur à ressort (pH) est supérieure à une pression de desserrage d'accumulateur à ressort (pL) d'au moins une marge de sécurité (DS).

5. Procédé selon la revendication 4, **caractérisé en ce que** la marge de sécurité (DS) est d'au moins 1 à 2 bar.

6. Procédé selon l'une des revendications 1 à 5, **caractérisé en ce que** la pression de maintien d'accumulateur à ressort (pH) est déterminée par un ensemble de soupapes (13, 22) ayant une action de limitation de la pression, de réduction de la pression ou de régulation de la pression.

7. Procédé selon l'une des revendications 1 à 6, **caractérisé en ce que** la pression de maintien d'accumulateur à ressort (pH) est réglée par la régulation d'un ensemble de soupapes (13) commandée par un programme informatique.

8. Système de frein de stationnement (FSY) comportant un frein à accumulateur à ressort (FSB) et un module de commande (EH, AM), pour un véhicule automobile (FG) ou un véhicule remorqué (AG), dans lequel le module de commande (EH, AM) est connecté à un circuit de frein (BK3, BK4), le circuit de frein (BK3, BK4) est alimenté en pression de réserve (pV) et des cylindres de frein à accumulateur à ressort (FBA, FBZ) peuvent être sollicités par une pression pour prendre une position de desserrage du frein à accumulateur à ressort (FSB), **caractérisé par** des moyens (13, 22) pour le réglage d'une pression de maintien d'accumulateur à ressort (pH) comme pression pour prendre la position de desserrage, avec une valeur qui est inférieure à la pression de réserve (pV) dans le circuit de frein (BK3, BK4) et qui est supérieure à la pression de desserrage d'accumulateur à ressort du système de frein de stationnement.

9. Système de frein de stationnement (FSY) selon la revendication 8, **caractérisé par** un ensemble de soupapes (13, 22) comportant une pression d'entrée (pV) et une pression de sortie (pA), dans lequel l'ensemble de soupapes (13, 22) fournit comme pression de sortie (pA) la pression de maintien d'accumulateur à ressort (pH).

10. Système de frein de stationnement (FSY) selon la revendication 9, **caractérisé par** un dispositif de commande électronique (ECU) avec lequel la pression de sortie (pA) de l'ensemble de soupapes (13) peut être réglée.

11. Système de frein de stationnement (FSY) selon la revendication 10, **caractérisé par** un capteur de pression (20) permettant de détecter la pression de sortie (pA) et de la transmettre au dispositif de commande électronique (ECU).

12. Système de frein de stationnement (FSY) selon la revendication 10 ou 11, **caractérisé en ce que** l'ensemble de soupapes (13) présente une soupape relais (14) pneumatique et une soupape proportionnelle (15) électropneumatique, **en ce que** la pression de sortie (pA) est appliquée à une sortie (18, 19) de l'ensemble de soupapes (13), **en ce que** la soupape relais (14) reçoit une pression de commande en provenance de la soupape proportionnelle (15), et **en ce que** la soupape proportionnelle (15) est commandée par le dispositif de commande électronique (ECU) pour le réglage de la pression de sortie (pA).

13. Système de frein de stationnement (FSY) selon l'une des revendications 10 à 12, **caractérisé en ce que** l'ensemble de soupapes (13) et le dispositif de commande électronique (ECU) sont des composants d'un module de commande (EH).

14. Système de frein de stationnement (FSY) selon l'une des revendications 9 à 13, **caractérisé en ce que** l'ensemble de soupapes (22) possède une soupape de limitation de pression (23).

15. Système de frein de stationnement (FSY) selon la revendication 14, **caractérisé en ce que** l'ensemble de soupapes (22) présente une soupape antiretour (26) montée en parallèle avec la soupape de limitation de pression (23).

16. Système de frein de stationnement (FSY) selon l'une des revendications 9 à 15, **caractérisé en ce que** l'ensemble de soupapes (22) est intégré dans un module de commande (AM).

17. Système de frein de stationnement (FSY) selon l'une des revendications 9 à 15, **caractérisé en ce que** l'ensemble de soupapes (22) est intégré dans une ligne de commande pneumatique (34) entre un ensemble de soupapes de stationnement (28) et un module de commande (AM).

18. Système de frein de stationnement (FSY) selon l'une des revendications 9 à 15, **caractérisé en ce que** l'ensemble de soupapes (22) est intégré dans un ensemble de soupapes de stationnement (28) qui est relié à un module de commande (AM) par l'intermédiaire d'une ligne de commande pneumatique (34).

19. Système de frein de stationnement (FSY) selon l'une des revendications 9 à 15, **caractérisé en ce que** des ensembles de soupapes (22) sont intégrés dans des ensembles de cylindres de frein (KBZ).

20. Système de frein de stationnement (FSY) selon l'une des revendications 9 à 15, **caractérisé en ce que** des ensembles de soupapes (22) sont intégrés dans des lignes de travail pneumatiques (32, 33) entre un module de commande (AM) et des cylindres de frein à accumulateur à ressort (FBA).

21. Système de frein de stationnement (FSY) selon l'une des revendications 8 à 20, **caractérisé en ce que** le module de commande (AM) est un modulateur d'essieu.

22. Produit-programme informatique comprenant des instructions qui, exécutées sur un dispositif de commande électronique (ECU) d'un module de commande (EH, AM) dans un système de frein de stationnement (FSY), exécutent le procédé selon la revendication 7.

23. Module de commande (EH, AM) électropneumatique comportant un dispositif de commande électronique (ECU) comportant les caractéristiques du dispositif de commande électronique du système de frein de stationnement (FSY) selon l'une des revendications 10 à 21.

24. Véhicule (ZG, AG) comportant un système de frein de stationnement (FSY) selon l'une des revendications 8 à 21.
